(19) Europäisches Patentamt
European Patent Office
Office européen des brevets

(11) **EP 1 461 231 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(21) Anmeldenummer: 02772069.7

(22) Anmeldetag: **19.09.2002**

(51) Int Cl.:
*B60R 21/01* (2006.01)     *G01P 15/00* (2006.01)

(86) Internationale Anmeldenummer:
**PCT/DE2002/003510**

(87) Internationale Veröffentlichungsnummer:
**WO 2003/055725 (10.07.2003 Gazette 2003/28)**

(54) **THERMISCHER SENSOR FÜR SEITENAUFPRALLDETEKTION**

THERMAL SENSOR FOR DETECTING A LATERAL COLLISION

CAPTEUR THERMIQUE PERMETTANT DE DETECTER UNE COLLISION LATERALE

(84) Benannte Vertragsstaaten:
**DE FR GB SE SK TR**

(30) Priorität: **22.12.2001 DE 10163911**

(43) Veröffentlichungstag der Anmeldung:
**29.09.2004 Patentblatt 2004/40**

(73) Patentinhaber: **ROBERT BOSCH GMBH**
**70442 Stuttgart (DE)**

(72) Erfinder:
• **KOCHER, Pascal**
**70839 Gerlingen (DE)**
• **ARNDT, Michael**
**72762 Reutlingen (DE)**
• **RECKNAGEL, Rolf-Juergen**
**07747 Jena (DE)**
• **AIDAM, Rolf**
**79346 Endigen (DE)**

(56) Entgegenhaltungen:
**DE-A- 4 322 488     DE-C- 10 124 546**

• **"PRESSURE BASED ADAPTIVE THRESHOLD SIDE IMPACT SENSOR" RESEARCH DISCLOSURE, KENNETH MASON PUBLICATIONS, HAMPSHIRE, GB, Nr. 384, 1. April 1996 (1996-04-01), Seite 243 XP000596122 ISSN: 0374-4353**

## Beschreibung

### Stand der Technik

Die Erfindung geht aus von einem thermischen Sensor für Seitenaufpralldetektion nach der Gattung des unabhängigen Patentanspruchs.

Aus der nach veröffentlichten deutschen Patentanmeldung DE 101 24 546 der Anmelderin sind Mittel zur Bestimmung einer Temperaturänderung bekannt, die dadurch realisiert werden, dass ein schneller und ein langsamer Temperatursensor, hier durch unterschiedliche temperaturabhängige Widerstände realisiert, verwendet werden. Damit ist es möglich, die Temperaturänderung $\Delta T$ von der Umgebungstemperatur $T_0$ zu unterscheiden.

Der Temperatursensor weist weiterhin einen elektronischen Filter auf, der als Hochpass ausgebildet ist und ein Mess-Signal einer Brückenschaltung filtert. Aus DE 43 22 488 A1 ist eine Steuereinheit mit einem Luftdrucksensor für ein Insassenschutzsystem eines Fahrzeugs bekannt. Diese Steuereinheit ist in einem Seitenteil des Fahrzeugs anzubringen und zur Erkennung eines seitenaufpralldarstellenden Verkehrsunfalls gedacht, wobei die Steuereinheit den beim Verkehrsunfall auftretenden stoßartigen Druckanstieg in der Umgebungsluft des Sensors auswertet.

### Vorteile der Erfindung

Der erfindungsgemäße thermische Sensor für Seitenaufpralldetektion mit den Merkmalen des unabhängigen Patentanspruchs hat demgegenüber den Vorteil, dass die Bildung des Verhältnisses von $\Delta T/T_0$ vor der Digitalisierung erfolgt und zwar durch eine Filterschaltung. Bei dieser Variante ist im Fall des Einsatzes von analogen Filterschaltungen eine geringere Auflösung der Digitalisierung ausreichend. Das Temperatursignal wird dabei durch Hochpass- und Tiefpassfilterung in $\Delta T$- und $T_0$-Signale zerlegt, welche anschließend mit einem Dividierer dividiert werden. Im Falle des Einsatzes von analogen Schaltungen ist es hier möglich, einen analogen Dividierer zu verwenden, der natürlich auch entsprechend schnell ist. Anschließend wird das so entstandene Signal digitalisiert.

Durch die in den abhängigen Ansprüchen aufgeführten Maßnahmen und Weiterbildungen sind vorteilhafte Verbesserungen des im unabhängigen Patentanspruch angegebenen thermischen Sensors möglich.

Besonders vorteilhaft ist, dass auch eine Mischung aus digitalen und analogen Filtern bzw. der Einsatz von nur digitalen Filtern vorgesehen sein kann. In diesem Fall ist dann der Dividierer digital zu realisieren.

### Zeichnung

Ausführungsbeispiele der Erfindung sind in der Zeichnung dargestellt und werden in der nachfolgenden Beschreibung näher erläutert. Es zeigen Figur 1 ein Blockschaltbild des erfindungsgemäßen thermischen Sensors, Figur 2 ein erstes Ausführungsbeispiel der Mittel zur Bestimmung der Temperaturänderung und Figur 3 ein zweites Ausführungsbeispiel der Mittel zur Bestimmung der Temperaturänderung.

### Beschreibung

Zunehmend wird zur Sensierung von Seiten-Crashes der Einsatz von Sensoren vorgeschlagen, die indirekt die Verformung messen. Dazu können Druck- oder Temperatursensoren verwendet werden. Der Temperatursensor hat den Vorteil, dass er überprüfbar ist. Diese Verformungssensoren werden dann in einem Seitenteil des Kraftfahrzeugs eingesetzt, das größtenteils geschlossen ist, so dass ein nahezu adiabatischer Temperaturanstieg bei einem Seitenaufprall und der anschließenden Verformung des Seitenteils festzustellen ist. Die Sensorsignale werden dann über eine digitale Schnittstelle an das Zentralgerät, das auf dem Fahrzeugtunnel platziert ist, übertragen und dort verarbeitet. Es ist auch möglich, dass direkt in der Sensoreinheit, also dem thermischen Sensor, eine Auswertung der Sensorsignale erfolgt, dass also ein Auslösealgorithmus für Rückhaltemittel bereits im thermischen Sensor gerechnet wird. Dazu weist der thermische Sensor dann einen entsprechenden Prozessor oder ASIC auf.

Wie oben dargestellt, ist die Messung der Lufttemperaturänderung eine veritable Möglichkeit, die Türverformung indirekt zu messen. Durch die schnelle Deformation der Außenhaut der Tür wird die Luft im Türinnenraum nahezu adiabatisch komprimiert. Der schnelle Temperaturanstieg $\Delta T$ ist nach der Gleichung 1 von der schnellen Volumenänderung $\Delta V$, dem umkomprimierten Innenvolumen der Tür $V_0$ und der Umgebungstemperatur $T_0$ abhängig.

Linearisierte Adiabatengleichung:

$$\Delta T = \Delta V / V * (\chi - 1) * T_0$$

$\chi$: Adiabatenkoeffizient (1,402 für Luft)

Je höher die Umgebungstemperatur ist, desto höher ist auch $\Delta T$ bei gleichem $\Delta V$. Laut Adiabatengleichung ist $\Delta T/T_0$ proportional zu $\Delta V/V_0$.

Die Temperatursignalverarbeitung zur Crasherkennung kann nun auf verschiedene Arten erfolgen:

1. Der Sensor erfasst den gesamten relevanten Temperaturbereich, wobei dann das Temperatursignal mit ausreichend hoher Auflösung digitalisiert wird und im Algorithmus verarbeitet wird. Dabei wird die Umgebungstemperatur berücksichtigt.

2. Im Algorithmus wird durch Mittelwertbildung $T_0$ bestimmt. $\Delta T$ wird durch einen Vergleich des Temperatursignals mit dem Mittelwert berechnet. $\Delta T$ wird weiterverarbeitet und mit Schwellen verglichen, die von $T_0$ abhängig sind.

3. Der Sensor erfasst den gesamten relevanten Temperaturbereich, also die Summe aus der Umgebungstemperatur und gegebenenfalls einer Temperaturänderung. Dieses Signal wird mit ausreichender Auflösung digitalisiert. Aus dem Signal wird durch digitale Hochpassfilterung $\Delta T$ und durch Tiefpassfilterung oder Mittelwertbildung $T_0$ berechnet und diese Größen dividiert. Die Berechnung von $\Delta T/T_0$ kann sowohl im Sensor-ASIC als auch in der zentralen Auswerteeinheit erfolgen. Erfindungsgemäß wird nun diese Variante durchgeführt und auch die folgenden, die eine Filterschaltung zur Trennung von $\Delta T$ und $T_0$ einsetzen. Dabei ist insbesondere von Vorteil, dass die Bildung von $\Delta T/T_0$ vor der Digitalisierung durch eine analoge Filterschaltung erfolgt. Bei dieser Variante ist eine geringere Auflösung der Digitalisierung als bei den anderen Varianten ausreichend. Das Temperatursignal wird durch Hochpass- und Tiefpassfilterung in $\Delta T$- und $T_0$-Signale zerlegt, welche anschließend mit einem analogen Dividierer dividiert werden. Anschließend wird das so entstandene Verhältnissignal digitalisiert.

Eine weitere Variante ist, dass die Messung von $\Delta T/T_0$ durch eine Variation der Spannung, die eine Brückenschaltung speist, erfolgt. Das Ausgangssignal wird tiefpassgefiltert. Durch eine Auswerteeinheit wird die Eingangsspannung in der Weise verändert, dass das Signal der Brücke nach einer Hochpassfilterung proportional zu $\Delta T/T_0$ ist.

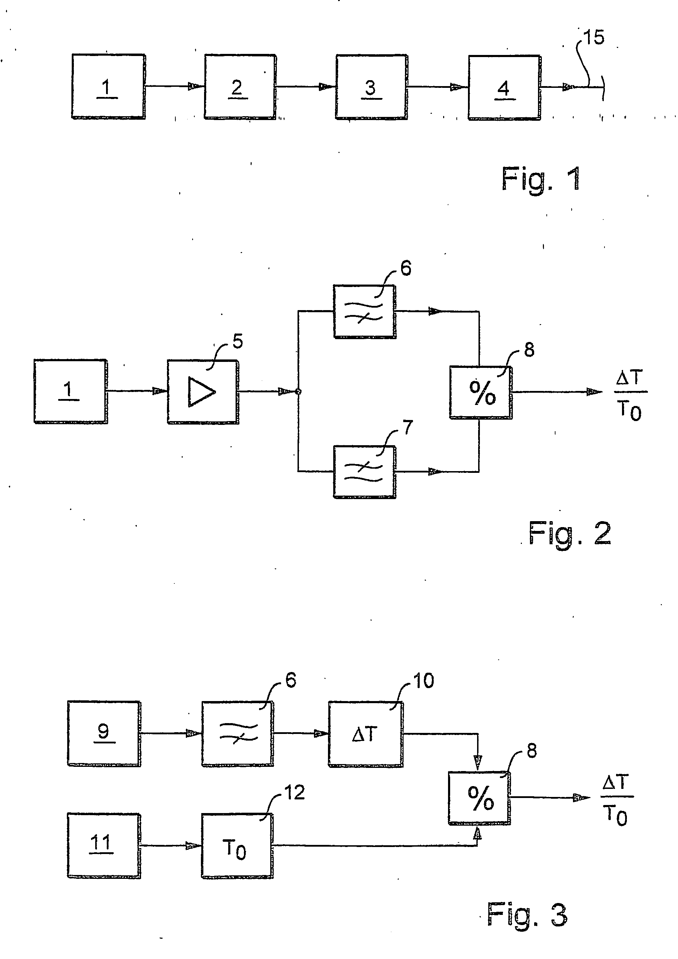

Figur 1 zeigt nun den Aufbau des erfindungsgemäßen thermischen Sensors als Blockschaltbild. Ein Sensorelement 1, das üblicherweise mikromechanisch hergestellt ist, wird durch Aufbringen von temperaturabhängigen Widerständen aus Platin auf einem temperaturisolierenden Material, das als Membran ausgeführt ist, an eine Filterschaltung 2 angeschlossen. Die Filterschaltung 2 ist an einen Signalverarbeitungsteil 3 angeschlossen, der wiederum die Signale über eine digitale Schnittstelle 4 und eine Zweidrahtleitung 15 an ein Steuergerät überträgt. Anstatt der Zweidrahtleitung 15 ist es auch möglich, einen Bus zu verwenden. Bei dem Einsatz der Zweidrahtleitung 15 ist es möglich, dass die digitale Schnittstelle 4 die Signale unidirektional überträgt, ohne vom Steuergerät Daten zu empfangen. Dies vereinfacht den Aufbau des thermischen Sensors erheblich.

Figur 2 zeigt nun den erfindungsgemäßen Aufbau der Mittel zur Bestimmung der Temperaturänderung. Das Sensorelement 1 ist an einen Verstärker 5 angeschlossen, der auch nach der folgenden Schaltung vorhanden sein kann. Das Ausgangssignal des Messverstärkers 5 geht an einen Hochpass 6 und einen Tiefpass 7. Für den Hochpass 6 und den Tiefpass 7 können die üblichen Schaltungen aus konzentrierten passiven Bauelementen - Widerstand, Kondensator und Induktivität - eingesetzt werden. Auch eine Ersatzschaltung mittels Operationsverstärker ist hier möglich. Der Hochpass 6 filtert die Temperaturänderung aus dem Signal heraus, die schnell im Vergleich zur Änderung der Umgebungstemperatur $T_0$ ist. Die Umgebungstemperatur $T_0$ wird durch den Tiefpass 7 herausgefiltert. Im analogen Dividierer 8 wird das Verhältnis der ausgefilterten Signale $\Delta T$ und $T_0$ gebildet. Am Ausgang des Dividierers 8 liegt dann das Verhältnis $\Delta T/T_0$ vor, das digitalisiert werden kann. In analoger Schaltungstechnik kann ein Dividierer durch den Einsatz eines Multiplizierers im Rückkopplungspfad eines Verstärkers realisiert werden. Die dabei verwendeten Multiplizierer basieren zumeist auf der nichtlinearen Kennlinie eines pn-Übergangs. Solche Dividierer sind als integrierte Schaltungen oder als Schaltungsteil auf einem ASIC erhältlich.

Alternativ ist es hier möglich, dass digitale Filter 6 und 7 verwendet werden können und auch ein digitaler Dividierer 8. Dies macht es erforderlich, dass nach dem Messverstärker 5 bereits ein Analog/Digital-Wandler vorliegt. Digitale Filter können beispielsweise auf digitalen Signalprozessoren realisiert sein.

Figur 3 zeigt ein zweites Ausführungsbeispiel der erfindungsgemäßen Mittel zur Bestimmung der Temperaturänderung. Hier wird ein schneller Temperatursensor 9 verwendet, aus dem das Signal $\Delta T$ mittels des angeschlossenen Hochpassfilters 6 herausgefiltert wird. Danach liegt das Signal $\Delta T$ im Block 10 vor, das dann im Dividierer 8 mit dem Signal $T_0$, das mittels eines langsamen Temperatursensors 11 ermittelt wird. Hier ist keine Filterung notwendig. Filter 6 und Dividierer 8 können je nach Wahl digital oder analog ausgeführt werden. Entsprechend ist ein Analog/Digital-Wandler vorzusehen. Am Ausgang des Dividierers 8 liegt wiederum die Verhältniszahl $\Delta T/T_0$ vor, die dann weiterverarbeitet werden kann und die Aussage darüber gibt, ob ein Seitenaufprall vorliegt oder nicht.

**Patentansprüche**

1. Thermischer Sensor für Seitenaufpralldetektion, wobei der thermische Sensor Mittel zur Bestimmung einer Lufttemperaturänderung aufweist, wobei der thermische Sensor in einem weitgehend geschlossene Seitenteil eines Kraftfahrzeugs einsetzbar ist, so dass eine Verformung des Seitenteils durch die Lufttemperaturänderung messbar ist, wobei die Mittel zur Bestimmung der Lufttemperaturänderung wenigstens eine Filterschaltung (2) aufweist, wobei die Filterschaltung (2) ein Temperatursignal von einem Sensorelement (1) des thermischen Sensors durch eine Hoch- und Tiefpassfilterung (6, 7) in die Lufttemperaturänderung und die Umgebungstemperatur zerlegt, wobei der thermische Sensor einen Dividierer aufweist, der die Lufttemperaturänderung durch die Umgebungstemperatur dividiert.

**2.** Thermischer Sensor nach Anspruch 1, **dadurch gekennzeichnet, dass** die Filterschaltung (2) zur Hoch- und Tiefpassfilterung analoge Filter (6, 7) aufweist.

**3.** Thermischer Sensor nach Anspruch 1 oder 2, **dadurch gekennzeichnet, dass** die Filterschaltung wenigstens einen digitalen Filter aufweist.

**Claims**

**1.** Thermal sensor for detecting side impacts, the thermal sensor having means for determining a change in air temperature, the thermal sensor being able to be used in a largely closed side part of a motor vehicle, with the result that deformation of the side part can be measured by the change in air temperature, the means for determining the change in air temperature having at least one filter circuit (2), the filter circuit (2) breaking down a temperature signal from a sensor element (1) of the thermal sensor into the change in air temperature and the ambient temperature by means of high-pass and low-pass filtering (6, 7), the thermal sensor having a divider which divides the change in air temperature by the ambient temperature.

**2.** Thermal sensor according to Claim 1, **characterized in that** the filter circuit (2) has analogue filters (6, 7) for high-pass and low-pass filtering.

**3.** Thermal sensor according to Claim 1 or 2, **characterized in that** the filter circuit has at least one digital filter.

**Revendications**

**1.** Détecteur thermique pour la détection d'impact latéral, le détecteur thermique présentant des moyens pour déterminer une variation de la température de l'air, le capteur thermique pouvant être utilisé dans une partie latérale essentiellement fermée d'un véhicule automobile de telle sorte qu'une déformation de la partie latérale puisse être mesurée par la variation de la température de l'air, les moyens pour déterminer la variation de la température de l'air présentant au moins un circuit filtrant (2), le circuit filtrant (2) décomposant un signal de température provenant d'un élément de détection (1) du détecteur thermique en la variation de la température de l'air et en la température environnante par le biais d'un filtrage passe-haut et passe-bas (6, 7), le détecteur thermique présentant un diviseur qui divise la variation de la température de l'air par la température ambiante.

**2.** Détecteur thermique selon la revendication 1, **ca-** ractérisé en ce que le circuit filtrant (2) présente des filtres analogiques (6, 7) pour le filtrage passe-haut et passe-bas.

**3.** Détecteur thermique selon la revendication 1 ou 2, **caractérisé en ce que** le circuit filtrant présente au moins un filtre numérique.

Fig. 1

Fig. 2

$$\frac{\Delta T}{T_0}$$

Fig. 3

$$\frac{\Delta T}{T_0}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10124546

- DE 4322488 A1